# EUROPEAN PATENT APPLICATION

(11) **EP 3 560 388 A1**
(43) Date of publication of application: **30.10.2019**
(21) Application number: 19000231.1
(22) Date of filing: 09.09.2015
(51) Int. Cl.: A47C 20/04, A47C 20/08

(54) **LINEAR DUAL ACTUATOR**

(30) Priority: 09.09.2014 DK PA201400516
(62) Divisional of application: 15781291.8
(71) Applicant: LINAK A/S, 6430 Nordborg (DK)
(72) Inventor: Andersen, Hans Gram, 6270 Tønder (DK); Christensen, Jens Asmus Ritz, 6400 Sønderborg (DK); Kristensen, Henning, 6470 Sydals (DK)
(74) Representative: Pedersen, Soeren Skovgaard

(57) **Abstract**

Linear dual actuator for lying or sitting furniture having at least two sections (2,3), which with one end is rotatably embedded in the article of furniture and where each section (2,3) with an arm (5,7) secured to a pivot shaft (4,6) can be adjusted. The dual actuator comprises a housing (8) with a recess (10) in each end for each of the pivot shafts (4,6) on the article of furniture and where the arms (5,7) on the pivot shafts (4,6) after the dual actuator has been mounted on the article of furniture reach into the housing (8). Each end of the housing is furnished with a drive comprising an electric motor (11), which through a transmission (12) drives a spindle (13a) with a thrust element (18) having one end in engagement with the arm (5,7) for adjusting the sections (2,3). The electric motors (11) are located axis-aligned with the respective spindles (13a). Thus, the housing (8) can be constructed as a flat box with a relatively low height, as the only thing which should be considered in terms of the height is the thickness of the electric motors and not their length. As the housing (8) can be constructed as a flat box without bulges and indentations the mould is thus also relatively uncomplicated.

## Description

The present invention relates to a linear dual actuator for lying and sitting furniture, and the invention also relates to an article of lying or sitting furniture.

Electrically driven linear dual actuators for domestic beds were developed in the late 1980s, where the back rest and leg rest section of the bed can be adjusted, cf. thus DE 38 42 078 C2 to Dietmar Koch and EP 0 372 032 B2 to Eckhart Dewert. In the bed there is a transverse shaft for both the back rest and leg rest section, respectively, to which shaft an arm is secured which is affected by the dual actuator to adjust the sections. The introduction of this type of actuator for the private bed marked resulted in a significant interest for electrically adjustable beds, especially as the interest also was followed up with a concurrent product development in order to bring the price of the furniture down into a price range, which made these commonly available. A further product development has subsequently taken place, such that today there are also dual actuators for care beds with the special requirements connected therewith.

Before the introduction of the dual actuators there was used single actuators, e.g. as shown in DE 296 04 293 U1 Dewert Antriebs- and DE 94 12 104.4 Dewert Antriebs- in adjustable beds and chairs for adjusting these. In DE 297 14 746 U1 there is suggested a drive comprising two single actuators arranged in a common box. With two single actuators it is possible to arrange these in various ways in the box, e.g. side by side for chairs as the length cab be made short. Anyway the construction is rather bulky as it is two single actuators compared with a dual actuator where all the components are embedded in the housing.

The dual actuators comprise a common housing with an electrical drive in each end, i.e. one drive for the back rest section and another for the leg rest section. The two drives have the same basic structure and comprise a spindle, which with one end is embedded in the housing. A thrust element with a spindle nut in engagement with the spindle is arranged on the spindle. When the spindle is rotated the thrust element will be displaced in one or the other direction depending on the direction of rotation of the spindle. The spindle is driven by an electric motor through a transmission, namely a worm gear, where the worm is made as an extension of the motor shaft, while the worm wheel is secured to the end of the spindle. In the top of the housing in the area by the thrust element the side walls of the housing have a recess for receiving the transversal shaft of the bed, such that the arm on the shaft reaches into the housing and can be affected by the thrust element on the corresponding drive. The dual actuator is retained on the shaft by means of a cover on the housing, said cover is slit above the shaft. The two electric motors are positioned perpendicular out from the housing, which means, both that they take up space, makes the dual actuator less cleaning-friendly, makes the dual actuator difficult to handle, required a complicated mould and take up a large volume during shipping.

In DE 10 2007 060 112 A1 and DE 10 2007 062 300 A1, both to Kurt Schmid the disadvantages of the protruding electric motors are sought solved by placing the electric motors in an upright position. The electric motors located in an upright position result in a relatively large height of the housing but also a relatively large width. Reduction of the width of the housing is sought solved by creating a bulge for the electric motors, which however complicates the mould and further has the same disadvantages as the traditional horizontal positioning of the electric motors. This is sought solved in DE 20 2013 102 151 U1 to Sino-Europe GmbH & Co. KG by creating indentations in the housing such that an adjacent dual actuator during shipping with the bulges for the electric motors can fit into these indentations. This however complicates the mould further. In terms of strength it is also a disadvantage that the bulges and indentations are located directly opposite each other.

The purpose of the invention is to provide a dual actuator where the disadvantages described above are sought solved.

This is achieved according to the invention by designing the dual actuator as stated in claim 1, i.e. by positioning the electric motors axis-aligned with the respective spindles. Hereby, the housing can be designed as a flat box with a relatively low height, as the only thing which should be considered in terms of the height is the thickness of the electric motors and not their length. As the housing can be constructed as a flat box without bulges and indentations the mould is thus also relatively uncomplicated. Expediently, the electric motor is placed over the spindle, as the arm on the shaft of the bed must have a certain length in order to exercise the desired torque on the shaft. With this location the motor shaft of the electric motor is parallel to the spindle. The transmission can be constructed in various ways e.g. as a spur toothed gear train or a belt drive. A special solution comprises a worm gear, where the worm is designed as an extension of the motor shaft, while the worm wheel is located horizontally on a shaft, which extends down past the spindle and where this opposite the spindle is furnished with a worm in engagement with a worm wheel on the spindle. All things considered this results in an expedient transmission. The worm, designed as an extension of the motor shaft, is expediently guided with its free front end in a recess designed as a plain bearing in a transversal wall in the housing. Thus, deflection of the worm is avoided. In an embodiment the worm wheel is in engagement with the worm designed as an extension of the motor shaft and the worm in engagement with the worm wheel on the spindle constructed in each end of a length of pipe and the shaft runs axially through the worm wheel, the length of pipe and the worm. Thus, the worm wheel, the length of pipe and the worm can be cast as one unit in plastic and with a through-going steel shaft.

By designing the transmission such that is comprises a further shaft with a third worm wheel in engagement with the first worm, where the engagement is opposite the first worm wheel and a third worm in engagement with the second worm wheel opposite the second worm - in other words a set consisting of worm wheel/worm located diametrically opposed to the worm in connection with the motor shaft and the worm wheel on the spindle, respectively - the construction is capable of transferring considerably larger forces. This is due to the fact that the two sets of worm wheel/worm have a stabilizing effect on the worm in connection with the motor shaft and the worm wheel on the end of the spindle.

In principle the two drives in the linear dual actuator could have different types of transmissions, but in terms of production and logistics it has proven expedient that both drives comprise the same type of transmission.

The invention further relates to an article of lying or sitting furniture as stated in claim 8, and which comprises at least two sections, where each section with one end is rotatably embedded around a horizontal axis in the article of furniture, a pivot shaft with an arm in connection with each section, and a linear dual actuator according to one or more of the claims 1-7 mounted on the pivot shafts such that the arm on the respective pivot shafts is in or can be brought into engagement with the respective thrust elements in the dual actuator.

An example of a slatted frame and dual actuator will be described more fully below with reference to the accompanying drawing. The drawing shows:
Fig. 1, a slatted frame shown with raised back and leg rest section,
fig. 2, a dual actuator seen directly from the side,
fig. 3, a longitudinal section through the dual actuator,
fig. 4, a drive for the leg rest section and a portion of the transversal shaft of this with the arm,
fig. 5, a longitudinal section through a second embodiment of the dual actuator according to the invention.
fig. 6 an enlarged cross section on the part of the actuator, which operates the leg rest section of the slatted frame, and
fig. 7 an outline of a further development of the transmission shown in fig. 3-6.

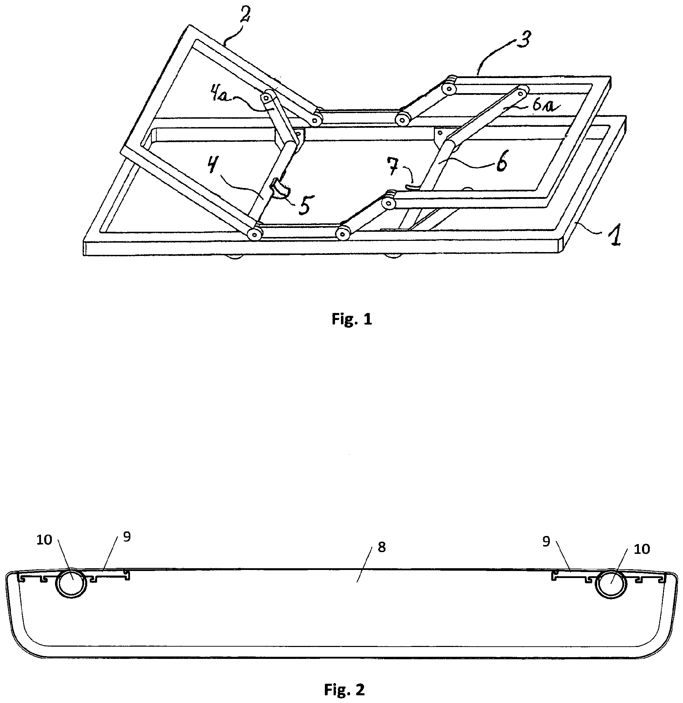

The slatted frame shown in fig. 1 comprises a frame 1 in which a back rest section 2 and an articulated leg rest section 3 are rotatably embedded around an axis. For the back rest section 2 a transversal shaft 4 is embedded in the frame, on which shaft an arm 5 is secured. On each end of the shaft a rod connected to the back rest section is mounted, which with the end towards the middle of the frame 1 is rotatably embedded in this. In a corresponding manner there is a transversal shaft 6 with an arm 7 for the leg rest section 3, which likewise with the end towards the middle of the frame 1 is rotatably embedded in this. Correspondingly, a rod on the ends of the shaft 6 is connected to the leg rest section 3.

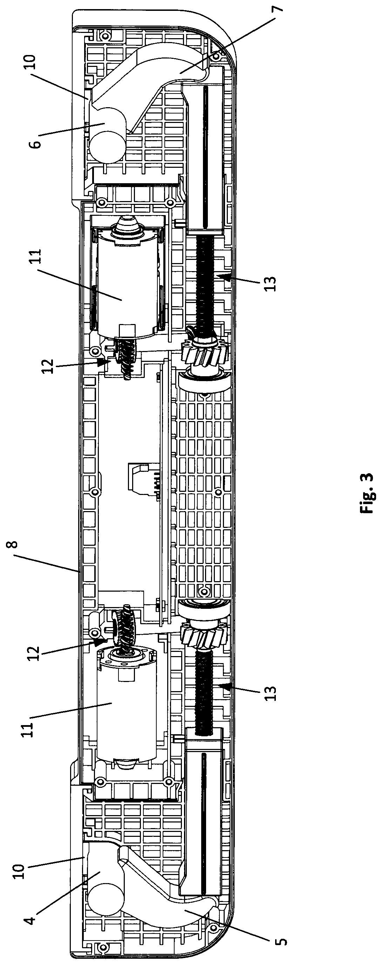

The movement of the back rest and leg rest section 2,3 is caused by a dual actuator as shown in fig. 2 and 3. The dual actuator comprises a housing 8 with a drive and an opening cover at each end. With reference to the end of the dual actuator which operates the leg rest section, the cover 9 gives access to a recess 10 in the side walls of the housing for the transversal shaft 6 for the leg rest section 3. As mentioned, a drive comprising an electric motor 11 is located in connection with the recess 10. Through a transmission 12 this electric motor 11 drives a spindle unit 13 comprising a spindle 13a, which with a shaft end 13b is embedded with a ball bearing 14 in the housing, just as the spindle unit comprises a spindle nut 13c. As it appears the electric motor 11 is located horizontally at a level over and parallel with the spindle 13a. The transmission 12 comprises a first worm gear 15, where the worm 15a is provided in continuation of the motor shaft. The worm 15a is with its front end guided in a recess designed as a plain bearing 8b in a transversal wall 8a in the housing. The worm 15a is in engagement with a worm wheel 15b located next to the worm 15a. This worm wheel 15b is mounted on a vertical shaft 16 embedded in the housing. The transmission further comprises a second worm gear 17, where the worm 17a is mounted in the opposite end of the shaft 16 as the worm wheel 15b. The worm 17a is in engagement with a worm wheel 17b, mounted on a shaft end 13b of the spindle 13a. The worm wheel 15b and the worm 17a are with an intermediate length of pipe cast as one unit with the shaft 16 as a through-going steel shaft, which strengthens the unit. A thrust element 18 is arranged on the spindle 13a. The thrust element 18 has a longitudinal channel 19 for receiving the spindle 13a and in the channel the spindle nut 13c is provided. The thrust element 18, which has a square cross section is guided in a guideway 20 in the housing 8 and is thus secured against rotation. When the spindle 13a is rotated the thrust element 18 thus moves back and forth depending on the direction of rotation of the spindle. The front end 18a of the thrust element 18 is designed as a contact surface for the arm 7 on the shaft 4 of the leg rest section 3. With the end 7a the arm 7 loosely engages the end 18a of the thrust element 18. When the thrust element 18 is moved towards the end of the housing the front end 18a of this pushes against the arm 7 on the shaft 6 such that the leg rest section 3 is raised. Correspondingly, when the thrust element 18 is rotated towards the middle of the housing the leg rest section 3 will be lowered as the load from the leg rest section 3 will press the end of the arm 7a against the front end 18a of the thrust element 18.

The drive and the end of the housing in the other end of the dual actuator are constructed in a corresponding manner and operate the back rest section.

The actuator is mounted on the slatted frame by pulling the covers 9 outwards and leading the actuator up until the shafts 4,6 rest in the recesses 10 and the arms 5,7 on the shafts reach down in front of the thrust elements 18. The covers 9 are closed again, by which the actuator is suspended on the shafts 4,6.

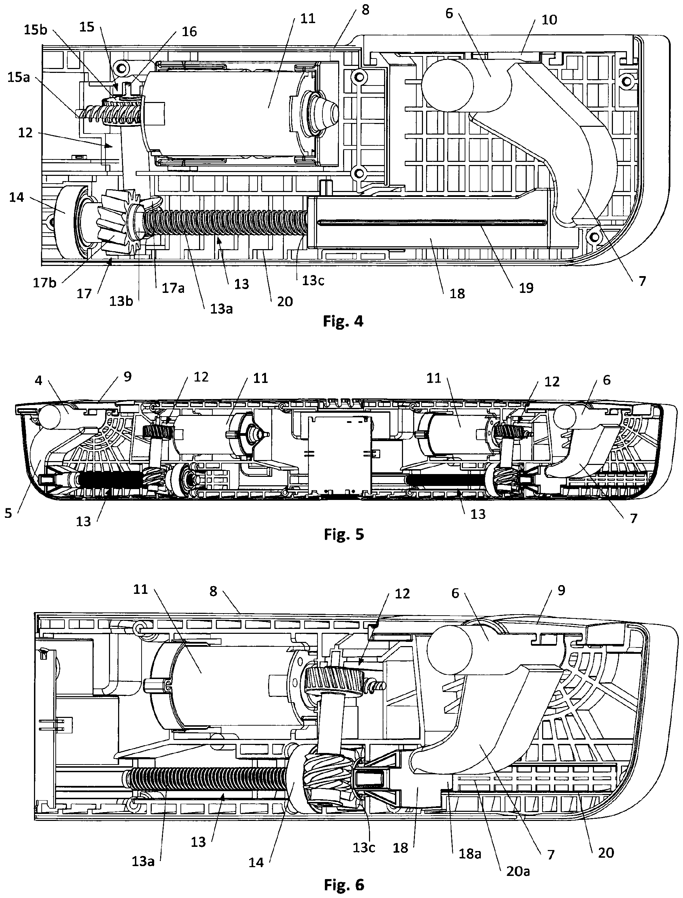

The dual actuator shown in figs. 5-6 of the drawing solely differs from the dual actuator described above by the inverse function of the spindle unit 13, i.e. in that the spindle nut 13c is arranged in the worm wheel 17b and that this worm wheel 17b with a ball bearing 14 is embedded in the housing 8. The thrust element 18 is secured to the end of the spindle, which faces towards the arm 7 on the pivot shaft 4 of the leg rest section 3. When the spindle nut 13c is rotated the spindle 13a with the thrust element 18 will be displaced axially in one or the other direction depending on the direction of rotation of the spindle nut 13c. In the drawing the same reference numerals are used for the same components as above.

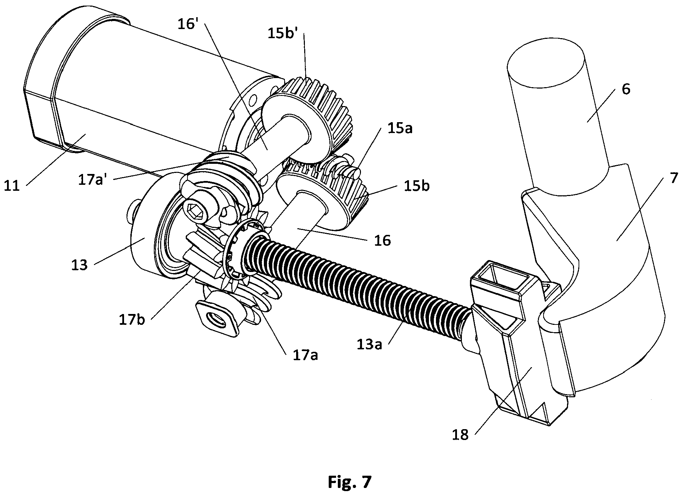

Fig. 7 of the drawing shows a further development of the transmission between motor and the spindle. This further development consists therein that located symmetrically to the shaft 16 with the worm wheel 15b and the worm 17a is a further second shaft 16' with a worm wheel 15b' in engagement with the worm 15a on the motor shaft and a further worm 17a' in engagement with the worm wheel 17b at the end of the spindle 13. As the worm 15a on the motor shaft is in engagement with two diametrically located worm wheels 15b,15b' located opposite each other, considerably larger forces can be transferred, partly because there are two worm wheels and partly because the worm is stabilized between the two worm wheels. Correspondingly, the worm wheel 17b on the end of the spindle is in engagement with two worms 17a,17a' located opposite each other and is thus also able to transfer large forces. All things considered a strong and stable construction.

It is noted that in the construction of the slatted frame shown in fig. 1 the back rest section 2 and the leg rest section 3 are indirectly connected to the respective pivot shafts 4,6. It is however understood that the respective pivot shafts can constitute the axis around which the back rest section and the leg rest section 3, respectively can rotate. The invention thus provides a dual actuator with a box-shaped housing, the height and shape of which is not dictated by the size of the electric motors.

## Claims

1. Linear dual actuator dedicated for lying or sitting furniture of the type comprising at least one section (2,3), which with one end is rotatably embedded around an axis in the article of furniture, and where the section (2,3) can be adjusted by means of a pivot shaft (4,6) directly or indirectly connected to the section (2,3), and where an arm (5,7) is secured to the pivot shaft (4,6) by which the pivot shaft (4,6) can be brought to rotate and thus adjust the section (2,3), said dual actuator comprising a housing (8) with a recess (10) in each end for each of the pivot shafts (4,6) on the article of furniture, and where the arms (5,7) on the pivot shafts (4,6), after the dual actuator has been mounted, reach into the housing (8), and where each end of the housing (8) is furnished with a drive comprising an electric motor (11) a transmission (12) in driving connection with the electric motor (11), a spindle unit (13) in driving connection with the transmission (12), which spindle unit (13) comprises a spindle (13a) and a spindle nut (13c) as well as a thrust element (18) in connection with the spindle unit (13), and where the thrust element (18) is guided in the housing (8) secured against rotation, and which can be brought into engagement with the arm (5,7) for adjusting the section (2,3), **characterized in that** the electric motors (11) are located inside the housing parallel with the respective spindles (13a).

2. Linear dual actuator according to claim 1, **charac terized** in that the electric motors (11) are located at a level above the spindles (13a).

3. Linear dual actuator according to claim 1 or 2, **cha racterized** in that the transmission (12) in at least one of the drives comprises a worm gear (15) with a first worm (15a) arranged in continuation of the motor shaft, and a first worm wheel (15b) located horizontally on an upper end of a first shaft (16), which extends down to the spindle (13a), as well as a second worm gear (17) with a second worm (17a) on the other end of the shaft (16) and a second worm wheel (17b) on the spindle (13a), where the second worm (17a) is in engagement with the second worm wheel (17b).

4. Linear dual actuator according to claim 3, **charac terized** in that both drives comprises a transmission as stated in claim 3.

5. Linear dual actuator according to claim 3 or 4, **cha racterized** in that the transmission comprises a second shaft (16a) with a third worm wheel (15b') in engagement with the first worm opposite the first worm wheel (15a) and a third worm (17a') in engagement with the second worm wheel (17b) opposite the second worm (17a).

6. Linear dual actuator according to claim 3, **charac terized** in that the worm (15a), designed as an extension of the motor shaft, with a front end is guided in a recess designed as a plain bearing (8b) in a transversal wall (8a) in the housing.

7. Linear dual actuator according to claim 4, **charac terized** in that the worm wheel (15b) in engagement with the worm (15a) in connection with the motor shaft and the worm (17a) in engagement with the worm wheel (17b) on the spindle (13a), is provided in opposite ends of a length of pipe and that the shaft (16) runs axially through the worm wheel (15b), the length of pipe and the worm (17a).

8. Article of lying and/or sitting furniture comprising at least one section (2,3), which with one end is rotatably embedded around an axis in the article of furniture, and where the section (2,3) can be adjusted by means of a pivot shaft (4,6) directly or indirectly connected to the section (2,3), and where an arm (5,7) is secured to the pivot shaft (4,6) by which the pivot shaft (4,6) can be brought to rotate and thus adjust the section (2,3), and a linear dual actuator according to one or more of the claims 1-7 mounted on the pivot shafts (4,6) such that the arm (5,7) on the pivot shaft (4,6) is in or can be brought into engagement with the thrust element (18) in the dual actuator.

9. Article of lying and/or sitting furniture according to claim 8, **characterized in that** it comprises two adjustable sections (2,3), where each section (2,3) with one end is rotatably embedded around an axis in the article of furniture, and where each section (2,3) can be adjusted by means of the respective pivot shaft (4,6) directly or indirectly connected to the section (2,3), and where an arm (5,7) is secured to each pivot shaft (4,6) by which the pivot shaft (4,6) can be brought to rotate and thus adjust the respective sections (2,3).
